# EUROPÄISCHE PATENTANMELDUNG

(11) **EP 3 590 800 A1**
(43) Veröffentlichungstag der Anmeldung: **08.01.2020**
(21) Anmeldenummer: 18182226.3
(22) Anmeldetag: 06.07.2018
(51) Int. Cl.: B62D 33/04, B60P 7/08

(54) **KOFFERAUFBAU FÜR EIN NUTZFAHRZEUG MIT LADUNGSSICHERUNGSPROFIL**

(71) Anmelder: Schmitz Cargobull AG, 48341 Altenberge (DE)
(72) Erfinder: Beelmann, Reinhard, 45721 Haltern am See (DE)
(74) Vertreter: Cohausz & Florack

(57) **Zusammenfassung**

Beschrieben und dargestellt ist ein Kofferaufbau (1) für ein Nutzfahrzeug (N), insbesondere Lastkraftwagen, Anhänger oder Sattelauflieger, mit einem Laderaum (8) und wenigstens einer den Laderaum (8) teilweise begrenzenden Wand (2, 6), insbesondere Seitenwand (6), wobei die Wand (2, 6) wenigstens zwei an den Laderaum (8) grenzende und vertikal voneinander beabstandete Montageprofile (10) aufweist, wobei die Montageprofile (10) jeweils wenigstens eine aus dem Laderaum (8) zugängliche Montageaufnahme aufweisen und wobei wenigstens ein Ladungssicherungsprofil (11) mit wenigstens einem Ladungssicherungselement zum, insbesondere formschlüssigen, Festlegen von Ladungssicherungsmitteln vorgesehen ist. Damit die Ladungssicherung einfacher und zuverlässiger erfolgen kann, ohne dabei die Herstellungskosten des Kofferaufbaus nennenswert zu erhöhen, ist vorgesehen, dass das Ladungssicherungsprofil (11) wenigstens zwei in Längsrichtung des Ladungssicherungsprofils (11) voneinander beabstandete Verbindungselemente (14, 15) jeweils zum Eingreifen in wenigstens eine Montageaufnahme eines Montageprofils (10) aufweist und dass das Ladungssicherungsprofil (11) in wenigstens zwei wenigstens im Wesentlichen horizontal voneinander beabstandeten Montagepositionen jeweils derart an den Montageprofilen (10) festlegbar ist, dass die Verbindungselemente (14, 15) in Montageaufnahmen unterschiedlicher Montageprofile (10) eingreifen.

## Beschreibung

Die Erfindung betrifft einen Kofferaufbau für ein Nutzfahrzeug, insbesondere Lastkraftwagen, Anhänger oder Sattelauflieger, mit einem Laderaum und wenigstens einer den Laderaum teilweise begrenzenden Wand, insbesondere Seitenwand, wobei die Wand wenigstens zwei an den Laderaum grenzende und vertikal voneinander beabstandete Montageprofile aufweist, wobei die Montageprofile jeweils wenigstens eine aus dem Laderaum zugängliche Montageaufnahme aufweisen und wobei wenigstens ein Ladungssicherungsprofil mit wenigstens einem Ladungssicherungselement zum, insbesondere formschlüssigen, Festlegen von Ladungssicherungsmitteln vorgesehen ist.

Nutzfahrzeuge, etwa in Form von Lastkraftwagen, Anhängern oder Sattelaufliegern, die Kofferaufbauten tragen, sind in unterschiedlicher Ausgestaltung bekannt. Dabei sind die Nutzfahrzeuge vorzugsweise zum Transport von Gütern, also der zu transportierenden Ladung, überwiegend im öffentlichen Straßenverkehr vorgesehen. Die Kofferaufbauten dieser Nutzfahrzeuge zeichnen sich durch feste Seitenwände, ein festes Dach und eine feste Stirnwand aus und unterscheiden sich insoweit von sogenannten Planenaufbauten, bei denen wenigstens eine Seitenwand und regelmäßig auch das Dach durch eine Plane verschlossen ist. Die festen Wände der Kofferaufbauten sind typischerweise als Paneele aufgebaut.

Bekannt ist dabei insbesondere der Aufbau der Paneele durch eine äußere Decklage, eine innere Decklage und eine dazwischen vorgesehene Kernlage, die meist aus einem geschäumten Kunststoff gebildet wird. Die Decklagen sind bedarfsweise selbst mehrlagig aufgebaut und umfassen wenigstens eine strukturgebende Lage, die dem Paneel die ausreichende Steifigkeit verleiht. Die strukturgebende Lage kann beispielsweise als Kunststoffschicht, insbesondere als faserverstärkte Kunststoffschicht ausgebildet sein. In vielen Fällen wird die strukturgebende Lage der Decklagen durch ein Blech, insbesondere Aluminium- oder Stahlblech, bereitgestellt.

Die Wände begrenzen teilweise einen Laderaum des Kofferaufbaus, in dem die Ladung aufgenommen werden kann. Da die Paneele von Kofferaufbauten Feuchtigkeit aus dem Laderaum fernhalten, werden Kofferaufbauten vielfach zum Trockentransport von feuchtigkeitsempfindlichen Gütern eingesetzt. Da zudem der geschäumte Kunststoff der Kernlage eine gute thermische Isolation des Laderaums ermöglicht, werden Kofferaufbauten auch häufig zum Kühltransport von temperaturempfindlichen Gütern verwendet.

Auf der dem Laderaum zugewandten Seite weisen die Wände, insbesondere die Seitenwände, von Kofferaufbauten regelmäßig länglich ausgebildete Montageprofile auf, die in unterschiedlichen Ausgestaltungen bekannt sind und beispielsweise dem Festlegen von Ausrüstungskomponenten des Kofferaufbaus dienen können. So können beispielsweise Ladungsstangen zum Aufhängen von Ladung oder sogenannte Doppelstockschienen zum Tragen von Paletten an Montageprofilen festgelegt werden. Zudem sind Montageprofile häufig als sogenannte Ladungssicherungsschienen ausgebildet, an denen Mittel zum Sichern der sich in dem Laderaum befindenden Ladung festgelegt werden können. Unabhängig von der Ausgestaltung eines Montageprofils weist dieses meist wenigstens eine Montageaufnahme auf, die aus dem Laderaum zugänglich ist und in die so entsprechende Ausrüstungskomponenten aus dem Laderaum eingreifen können, um diese Ausrüstungskomponenten an dem Montageprofil festzulegen. Bedarfsweise kann eine Wand auch mehrere Montageprofile aufweisen, die in vertikaler Richtung, also in einer Richtung wenigstens im Wesentlichen senkrecht zu dem Dach bzw. dem Laderaumboden, voneinander beabstandet sein können. Dann können zudem wenigstens zwei Montageprofile einer Wand in vertikaler Richtung wenigstens abschnittsweise übereinander angeordnet sein.

Die Ladung im Laderaum des Kofferaufbaus muss grundsätzlich gegenüber einem Verrutschen gesichert werden. Man spricht in diesem Zusammenhang auch von Ladungssicherung. Die Ladungssicherung erfolgt zum Beispiel mit sogenannten Zurrgurten, die um die Ladung gespannt und an Ladungssicherungselementen des Laderaumbodens oder der Wände gesichert werden. Andere Ladungssicherungsmittel wie Ladungssicherungsbalken, die quer hinter der Ladung angeordnet werden und ein Verrutschen der Ladung parallel zur Fahrtrichtung verhindern, sind ebenfalls bekannt. Die Sicherung der Ladungssicherungsmittel erfolgt häufig an länglich ausgebildeten Ladungssicherungsprofilen, die an den Wänden des Kofferaufbaus befestigt sein und Ladungssicherungselemente aufweisen können, an denen Ladungssicherungsmittel festlegbar sind. Dabei sind die Ladungssicherungselemente in aller Regel derart ausgestaltet, dass Ladungssicherungsmittel etwa in Form von Zurrgurten oder Ladungssicherungshaken formschlüssig an den Ladungssicherungselementen festgelegt werden können.

Da die Ladungssicherung je nach Beladungssituation des Kofferaufbaus an unterschiedlichen Stellen erfolgen muss, weist der Kofferaufbau in aller Regel über den Laderaum verteilt mehrere Ladungssicherungselemente auf, an denen ein Benutzer Ladungssicherungsmittel sichern kann. Dabei muss stets ein Kompromiss zwischen der Anzahl der Ladungssicherungselemente und den Herstellungskosten für den Kofferaufbau gefunden werden.

Daher liegt der vorliegenden Erfindung die Aufgabe zugrunde, den Kofferaufbau der eingangs genannten und zuvor näher erläuterten Art derart auszugestalten und weiterzubilden, dass die Ladungssicherung einfacher und zuverlässiger erfolgen kann, ohne dabei die Herstellungskosten des Kofferaufbaus nennenswert zu erhöhen.

Diese Aufgabe ist bei einem Kofferaufbau nach dem Oberbegriff des Anspruchs 1 dadurch gelöst, dass das Ladungssicherungsprofil wenigstens zwei in Längsrichtung des Ladungssicherungsprofils voneinander beabstandete Verbindungselemente jeweils zum Eingreifen in wenigstens eine Montageaufnahme eines Montageprofils aufweist und dass das Ladungssicherungsprofil in wenigstens zwei wenigstens im Wesentlichen horizontal voneinander beabstandeten Montagepositionen jeweils derart an den Montageprofilen festlegbar ist, dass die Verbindungselemente in Montageaufnahmen unterschiedlicher Montageprofile eingreifen.

Erfindungsgemäß kann das Ladungssicherungsprofil also je nach Beladungssituation des Nutzfahrzeugs in wenigstens zwei unterschiedlichen Montagepositionen an den Montageprofilen festgelegt werden. Dabei sind die Montagepositionen wenigstens im Wesentlichen horizontal, d. h. in einer Richtung wenigstens im Wesentlichen parallel zu dem Dach des Kofferaufbaus bzw. dem Laderaumboden, voneinander beabstandet. Auf diese Weise können Ladungssicherungsmöglichkeiten an sehr vielen unterschiedlichen Stellen und zudem sehr flexibel bereitgestellt werden, ohne dass sehr viele Ladungssicherungselemente erforderlich wären.

Die Verbindungselemente sind so an dem Ladungssicherungsprofil vorgesehen, dass eines der Verbindungselemente in wenigstens eine Montageaufnahme eines der Montageprofile und das wenigstens eine andere Verbindungselement in wenigstens eine Montageaufnahme des wenigstens einen anderen Montageprofils eingreifen kann. Es sind also wenigstens zwei separate Verbindungen zwischen dem Ladungssicherungsprofil und wenigstens zweier Montageprofile einer Wand des Kofferaufbaus vorgesehen.

Die Montageprofile sind häufig bündig in die Paneele der Wände eingelassen. Dazu ist die Kernlage der Paneele bereichsweise dünner ausgebildet und kann die innere Decklage eine Mulde im Paneel formen. Die Mulde ist in Form einer Rinne ausgebildet und dient als Vertiefung im Paneel der Aufnahme eines Montageprofils. Das Montageprofil wird dann bedarfsweise mit der Mulde verklebt, um das Montageprofil sicher in der Mulde zu halten.

Bei einer ersten besonders bevorzugten Ausgestaltung des Kofferaufbaus ist das Ladungssicherungsprofil in den Montagepositionen formschlüssig an den Montageprofilen, insbesondere in den Montageaufnahmen, festlegbar. Auf diese Weise wird ein einfaches Festlegen des Ladungssicherungsprofils an den Montageprofilen sowie ein einfaches Lösen des Ladungssicherungsprofils von den Montageprofilen bei geringem Herstellungsaufwand für das Ladungssicherungsprofil ermöglicht. Zudem kann das Ladungssicherungsprofil so im an den Montageprofilen festgelegten Zustand hohe Ladungssicherungskräfte an die Montageprofile übertragen. Alternativ oder zusätzlich kann das Ladungssicherungsprofil in den Montagepositionen auch kraftschlüssig an den Montageprofilen, insbesondere in den Montageaufnahmen, festlegbar sein. Auch so kann das Ladungssicherungsprofil einfach an den Montageprofilen festgelegt und von den Montageprofilen gelöst werden sowie eine zuverlässige Verbindung zwischen den Montageprofilen und dem Ladungssicherungsprofil ermöglicht werden.

Grundsätzlich kann es für eine schnelle und einfache Montage des Ladungssicherungsprofils zweckmäßig sein, wenn das Ladungssicherungsprofil in den Montagepositionen mittels wenigstens einer Schraube an den Montageprofilen gehalten ist. Durch die wenigstens eine Schraubverbindung können zudem hohe Kräfte aufgenommen werden. Um die Montage zu beschleunigen, kann es sich anbieten, wenn das Ladungssicherungsprofil in den Montagepositionen mittels wenigstens eines Elektromagneten an den Montageprofilen gehalten ist. Die Stabilität und Belastbarkeit der Verbindung zwischen den Ladungssicherungsprofilen und den Montageprofilen kann grundsätzlich und unabhängig von der Art der Verbindung gesteigert werden, wenn das Ladungssicherungsprofil in den Montageaufnahmen der Montageprofile festlegbar sind. Zudem lässt sich die Montage des Ladungssicherungsprofils vereinfachen, wenn das Verbindungsmittel, etwa die wenigstens eine Schraube und/oder der wenigstens eine Elektromagnet von bzw. an dem Ladungssicherungsprofil gehalten ist. Bedarfsweise kann eine sehr individuelle Montage des Ladungssicherungsprofils an den Montageprofilen durch die Verwendung wenigstens einer selbstschneidenden Schraube erfolgen. Unabhängig davon kann das Ladungssicherungsprofil in den Montagepositionen selbstverständlich auch teilweise formschlüssig und teilweise kraftschlüssig an den Montageprofilen festlegbar sein. Dann kann das Ladungssicherungsprofil beispielsweise in wenigstens eine Richtung formschlüssig und in wenigstens eine andere Richtung kraftschlüssig an den Montageprofilen festgelegt werden.

Um eine besonders zuverlässige Ladungssicherung zu ermöglichen, kann das Ladungssicherungsprofil, wenn dieses in den Montagepositionen an den Montageprofilen festgelegt ist, ortsfest an den Montageprofilen gehalten sein, sodass das Montageprofil in drei zueinander senkrechten Raumrichtungen formschlüssig an den Montageprofilen gehalten ist. Dabei kann ein gewisses Spiel zwischen dem Ladungssicherungsprofil und den Montageprofilen zulässig sein. Es ist jedoch im Hinblick auf eine zuverlässige Ladungssicherung grundsätzlich bevorzugt, wenn das Spiel eher gering ausfällt.

Um das Ladungssicherungsprofil sowie etwaige Ladungssicherungsmittel einfach und zuverlässig an den Montageprofilen, insbesondere in den Montageaufnahmen festlegen zu könnenn, können die Montageaufnahmen jeweils wenigstens eine aus dem Laderaum zugängliche Montagehinterschneidung bereitstellen. Dann kann das Ladungssicherungsprofil in den Montagepositionen jeweils derart formschlüssig an den Montageprofilen festlegbar sein, dass eines der Verbindungselemente wenigstens eine Montagehinterschneidung eines der Montageprofile und das wenigstens eine andere Verbindungselement wenigstens eine Montagehinterschneidung des wenigstens einen anderen Montageprofils hintergreift. Zusätzlich ist es zweckmäßig, wenn das Ladungssicherungsprofil in den Montagepositionen ausschließlich über die Verbindungselemente formschlüssig an den Montageprofilen festlegbar ist. Dann sind also außer den Verbindungselementen des Ladungssicherungsprofils keine weiteren Befestigungsmittel erforderlich, um das Ladungssicherungsprofil formschlüssig an den Montageprofilen festzulegen. Dies ermöglicht eine kostengünstige Herstellung der Ladungssicherungsprofile, da keine zusätzlichen Befestigungsmittel benötigt werden, und zudem eine einfache Handhabung der Ladungssicherungsprofile, weil der Benutzer keine zusätzlichen Befestigungsmittel betätigen muss.

Eine konstruktiv einfache Ausgestaltung der Verbindungselemente kann erreicht werden, wenn die Verbindungselemente jeweils wenigstens ein Hakenelement aufweisen und die Hakenelemente jeweils wenigstens einen Halteabschnitt umfassen. Dann können die Halteabschnitte jeweils eine Montagehinterschneidung hintergreifen, wenn das Ladungssicherungsprofil an den Montageprofilen festgelegt ist. Auf diese Weise können die Halteabschnitte jeweils mit einem Montageprofil wenigstens in einer wenigstens im Wesentlichen senkrecht zu der Wand des Kofferaufbaus angeordneten und in den Laderaum gerichteten Richtung einen Formschluss bilden.

Um das Ladungssicherungsprofil in einfacher Weise formschlüssig an den Montageprofilen festlegen und wieder von den Montageprofilen lösen zu können, bietet es sich an, wenn wenigstens ein Halteabschnitt wenigstens eines Verbindungselements gegenüber dem Ladungssicherungsprofil verstellt werden kann. Auf diese Weise kann das Ladungssicherungsprofil einfach an den Montageprofilen festgelegt und/oder von den Montageprofilen gelöst werden. Wenn sich der wenigstens eine verstellbare Halteabschnitt in einer Montagestellung befindet, kann er leicht in das Montageprofil eingesetzt werden und zudem formschlüssig an den Montageprofilen gehalten sein, wenn sich der wenigstens eine verstellbare Halteabschnitt in einer Arretierstellung befindet. Das Verstellen des wenigstens einen Halteabschnitts erfolgt vorzugsweise entlang des Ladungssicherungsprofils. Mithin wird der wenigstens eine Halteabschnitt bedarfsweise relativ zu dem einen Ladungssicherungselement des Ladungssicherungsprofils, insbesondere wenigstens teilweise in einer Ebene wenigstens im Wesentlichen parallel zu dem Ladungssicherungsprofil, bewegt. Dabei kann der wenigstens eine Halteabschnitt und das zugehörige Hakenelement bzw. Verbindungselement gemeinsam verstellbar sein.

Zudem kann ein besonders einfaches Festlegen des Ladungssicherungsprofils an den Montageprofilen realisiert werden, wenn das Verstellen des wenigstens einen Halteabschnitts gegen eine Rückstellkraft eines Federmittels erfolgt. Dann kann das Verstellen des Halteabschnitts von der Arretierstellung in die Montagestellung gegen die Rückstellkraft des Federmittels erfolgen, sodass beim Festlegen des Ladungssicherungsprofils an den Montageprofilen das Halteelement nach dem Passieren der Montagehinterschneidung automatisch in die Arretierstellung verstellt wird und die entsprechende Montagehinterschneidung hintergreift, sofern der Benutzer das Halteelement nicht festhält.

Ein einfaches Festlegen des Ladungssicherungsprofils an den Montageprofilen und ein einfaches Lösen des Ladungssicherungsprofils von den Montageprofilen wird außerdem ermöglicht, wenn das Verstellen des wenigstens einen Halteabschnitts durch Verschieben erfolgen kann. Aus demselben Grund bietet es sich an, wenn das Verstellen des wenigstens einen Halteabschnitts gegenüber einem anderen Halteabschnitt, insbesondere eines anderen Verbindungselements, erfolgt. Dann verändert sich also beim Verstellen des Halteabschnitts der Abstand zu dem entsprechenden anderen Halteabschnitt. Darüber hinaus ist es im Hinblick auf ein einfaches Festlegen bzw. Lösen des Ladungssicherungsprofils vorteilhaft, wenn das Verstellen des wenigstens einen Halteabschnitts wenigstens teilweise, insbesondere hauptsächlich, in Längsrichtung des Ladungssicherungsprofils erfolgt.

Um ein einfaches Festlegen des Ladungssicherungsprofils an den Montageprofilen zu ermöglichen, kann auch wenigstens ein verstellbarer Halteabschnitt eine zur Längsrichtung des Ladungssicherungsprofils geneigte Führungsfläche aufweisen. Dann kann die Führungsfläche beim Verbinden des zugehörigen Verbindungselements mit einem Montageprofil an dem Montageprofil, insbesondere einer Kante des Montageprofils, abgleiten und dabei den Halteabschnitt von der Arretierstellung in die Montagestellung verstellen. Dann wird der Halteabschnitt bedarfsweise automatisch und/oder zwangsweise durch die beim Abgleiten der Führungsfläche an dem Montageprofil auftretenden Kräfte von der Arretierstellung in die Montagestellung verstellt, ohne dass der Benutzer den Verstellmechanismus des Halteabschnitts gesondert betätigen müsste. Dies funktioniert besonders gut, wenn die Führungsfläche an der von dem Ladungssicherungsprofil abgewandten Seite des Halteabschnitts angeordnet ist. Wenn das Verstellen des Halteabschnitts von der Arretierstellung in die Montagestellung zusätzlich gegen eine Rückstellkraft eines Federmittels erfolgt, wird eine Art Rastverbindung geschaffen, die besonders zuverlässig gefügt werden kann. Dann kann der Halteabschnitt beim Verbinden des zugehörigen Verbindungselements mit einem Montageprofil nämlich zudem automatisch und/oder zwangsweise durch die Rückstellkraft des Federmittels von der Montagestellung zurück in die Arretierstellung verstellt werden, sobald der Halteabschnitt die entsprechende Montagehinterschneidung passiert hat, und so die Montagehinterschneidung zuverlässig hintergreifen.

Alternativ oder zusätzlich kann wenigstens eine durch ein Hakenelement gebildete Hakenaufnahme, derart ausgebildet sein, dass zwischen der Hakenaufnahme und einem Montageprofil wenigstens in einer Längsrichtung des Ladungssicherungsprofils ein Formschluss besteht, wenn das Ladungssicherungsprofil an den Montageprofilen festgelegt ist. Auf diese Weise kann das Ladungssicherungsprofil für den Benutzer in einfacher Weise an den Montageprofilen festgelegt werden und ist das Ladungssicherungsprofil sodann zuverlässig an den Montageprofilen gehalten. Alternativ oder zusätzlich kann es vorteilhaft sein, wenn wenigstens eine durch ein Hakenelement gebildete Hakenaufnahme nutförmig ausgebildet ist. Dann kann die Hakenaufnahme das Montageprofil in einem Bereich einer Montagehinterschneidung umgreifen, wenn das Ladungssicherungsprofil an den Montageprofilen festgelegt ist, und so eine besonders zuverlässige und sichere formschlüssige Verbindung zwischen dem Ladungssicherungsprofil und den Montageprofilen realisiert werden. Dies ist insbesondere dann der Fall, wenn die Breite der nutförmigen Hakenaufnahme wenigstens im Wesentlichen der Breite des umgriffenen Bereichs des Montageprofils entspricht und/oder die nutförmige Hakenaufnahme wenigstens im Wesentlichen U-förmig ausgebildet ist.

Hinsichtlich einer sicheren und stabilen Verbindung zwischen dem Ladungssicherungsprofil und den Montageprofilen ist es außerdem zweckmäßig, wenn wenigstens ein Verbindungselement wenigstens zwei Hakenelemente aufweist, die in Querrichtung des Ladungssicherungsprofils voneinander beabstandet sind und die jeweils wenigstens einen Halteabschnitt aufweisen. So können die wenigstens zwei Halteabschnitte eines Verbindungselements jeweils eine Montagehinterschneidung desselben Montageprofils hintergreifen. Dabei ist die Querrichtung des Ladungssicherungsprofils wenigstens im Wesentlichen parallel zu dem Ladungssicherungsprofil und wenigstens im Wesentlichen senkrecht zur Längsrichtung des Ladungssicherungsprofils angeordnet. Zusätzlich können dann wenigstens zwei Hakenaufnahmen, die durch in Querrichtung des Ladungssicherungsprofils voneinander beabstandete Hakenelemente eines Verbindungselements gebildet sind, jeweils mit demselben Montageprofil in derselben Längsrichtung des Ladungssicherungsprofils einen Formschluss bilden, wenn das Ladungssicherungsprofil an den Montageprofilen festgelegt ist. Auf diese Weise wird die Zuverlässigkeit und Stabilität der Verbindung zwischen dem Ladungssicherungsprofil und den Montageprofilen weiter erhöht.

Weiterhin kann es vorteilhaft sein, wenn wenigstens ein Montageprofil eine Mehrzahl von Montageaufnahmen, insbesondere von Montagehinterschneidungen, aufweist, die in Längsrichtung des Montageprofils und/oder quer dazu verteilt angeordnet sind. So können mehrere Ausrüstungskomponenten des Kofferaufbaus und/oder Ladungssicherungsmittel in einfacher Weise gleichzeitig an dem Montageprofil festgelegt werden. Alternativ oder zusätzlich kann es konstruktiv vorteilhaft sein, wenn sich die wenigstens eine Montageaufnahme, insbesondere die wenigstens eine Montagehinterschneidung, eines Montageprofils wenigstens im Wesentlichen über die gesamte Längserstreckung des Montageprofils erstreckt. Es kann sich also eine Montageaufnahme, insbesondere eine Montagehinterschneidung, wenigstens im Wesentlichen über die gesamte Länge des Montageprofils erstrecken oder es können mehrere Montageaufnahmen, insbesondere mehrere Montagehinterschneidungen, derart nacheinander in Längsrichtung des Ladungssicherungsprofils angeordnet sein, dass sich die Montageaufnahmen, insbesondere die Montagehinterschneidungen, gemeinsam wenigstens im Wesentlichen über die gesamte Länge des Ladungssicherungsprofils erstrecken, jedenfalls bis auf die Unterbrechungen. Auf diese Weise kann das Ladungssicherungsprofil an vielen horizontal voneinander beabstandeten Stellen mit dem Montageprofil verbunden werden und können zudem viele Ausrüstungskomponenten und/oder Ladungssicherungsmittel gleichzeitig an dem Montageprofil festgelegt werden. Dies gilt insbesondere, wenn sich die wenigstens eine über die gesamte Länge des Montageprofils erstreckende Montageaufnahmen, insbesondere Montagehinterschneidung, wenigstens im Wesentlichen ununterbrochen über die gesamte Längserstreckung des Montageprofils erstreckt. Dabei kann sich zudem das wenigstens eine Montageprofil wenigstens im Wesentlichen über die gesamte Länge der Wand erstrecken.

Im Hinblick auf ein einfaches Festlegen des Ladungssicherungsprofils an den Montageprofilen bietet es sich an, wenn wenigstens eine Montageaufnahme, insbesondere wenigstens eine Montagehinterschneidung, über wenigstens eine Montageöffnung aus dem Laderaum zugänglich ist. Dann kann ein Abschnitt eines Verbindungselements, insbesondere ein Halteabschnitt eines Hakenelements, nämlich einfach in die Montageöffnung eingeführt werden und, vorzugsweise, der Halteabschnitt zum Hintergreifen der Montagehinterschneidung anschließend hinter der Montagehinterschneidung positioniert werden. Zudem kann das Montageprofil so flächenbündig in die entsprechende Wand bzw. das entsprechende Paneel eingelassen sein. Weiterhin kann es vorteilhaft sein, wenn die wenigstens eine Montageaufnahme, insbesondere die wenigstens eine Montagehinterschneidung, eines Montageprofils über eine Mehrzahl von in Längsrichtung des Montageprofils verteilten Montageöffnungen zugänglich ist. Dann kann eine Montageaufnahme, insbesondere eine Montagehinterschneidung, eines Montageprofils oder eine Mehrzahl von Montageaufnahmen, insbesondere Montagehinterschneidungen, eines Montageprofils über eine Mehrzahl von Montageöffnungen aus dem Laderaum zugänglich sein. Dies hat den Vorteil, dass die Montageöffnungen einen zusätzlichen seitlichen Formschluss ermöglichen können.

Um bei unterschiedlichen Beladungszuständen des Kofferaufbaus Ladungssicherungsmittel in unterschiedlichen Höhen an dem Ladungssicherungsprofil festlegen zu können, ist es vorteilhaft, wenn das Ladungssicherungsprofil eine Mehrzahl von Ladungssicherungselementen aufweist, die in Längsrichtung des Ladungssicherungsprofils verteilt angeordnet sind. Aus demselben Grund ist es vorteilhaft, wenn sich das wenigstens eine Ladungssicherungselement, insbesondere wenigstens im Wesentlichen ununterbrochen, wenigstens im Wesentlichen über die gesamte Längserstreckung des Ladungssicherungsprofils erstreckt. Je nachdem, ob lediglich ein Ladungssicherungselement oder mehrere Ladungssicherungselemente vorgesehen sind, erstreckt sich also ein Ladungssicherungselement etwa über die gesamte Länge des Ladungssicherungsprofils oder sind mehrere Ladungssicherungselemente in Längsrichtung des Ladungssicherungsprofils derart nacheinander angeordnet, dass sich die Ladungssicherungselemente zusammen etwa über die gesamte Länge des Ladungssicherungsprofils erstrecken. So können über die gesamte Längserstreckung des Ladungssicherungsprofils Ladungssicherungsmittel, wie beispielsweise Ladungssicherungshaken, an dem Ladungssicherungsprofil festgelegt werden.

Eine platzsparende Ausgestaltung des Ladungssicherungsprofils und gleichzeitig ein einfaches formschlüssiges Festlegen von Ladungssicherungsmitteln an dem Ladungssicherungsprofil wird ermöglicht, wenn das wenigstens eine Ladungssicherungselement des Ladungssicherungsprofils eine Ladungssicherungshinterschneidung ist. An dieser Ladungssicherungshinterschneidung können dann Ladungssicherungsmittel, etwa in Form von Ladungssicherungshaken, formschlüssig festgelegt werden, indem die Ladungssicherungsmittel die Ladungssicherungshinterschneidung hintergreifen. Dabei kann das Festlegen der Ladungssicherungsmittel an der Ladungssicherungshinterschneidung besonders einfach erfolgen, wenn die Ladungssicherungshinterschneidung über wenigstens eine Ladungssicherungsöffnung zugänglich ist, in die die Ladungssicherungsmittel teilweise eingeführt werden können. Um darüber hinaus ein einfaches Festlegen von Ladungssicherungsmitteln an dem Ladungssicherungsprofil in verschiedenen Höhen des Laderaums zu ermöglichen, bietet es sich an, wenn die wenigstens eine Ladungssicherungshinterschneidung über eine Mehrzahl von in Längsrichtung des Ladungssicherungsprofils verteilten Ladungssicherungsöffnungen zugänglich ist. Demnach ist also vorgesehen, dass eine Ladungssicherungshinterschneidung oder eine Mehrzahl von Ladungssicherungshinterschneidungen über mehrere in Längsrichtung des Ladungssicherungsprofils verteilte Ladungssicherungsöffnungen zugänglich ist.

Alternativ oder zusätzlich kann wenigstens eine Seitenanschlagfläche wenigstens eines Verbindungselements und ein Seitenanschlag eines Montageprofils wenigstens im Wesentlichen in einer Querrichtung des Ladungssicherungsprofils einen Formschluss bilden, wenn das Ladungssicherungsprofil an den Montageprofilen festgelegt ist. Ein gewisses Spiel zwischen der Seitenanschlagfläche des Verbindungselements und dem Seitenanschlag des Montageprofils kann dabei zulässig sein, ist jedoch grundsätzlich weniger bevorzugt. Unter einer Querrichtung des Ladungssicherungsprofils wird eine Richtung verstanden, die senkrecht zu einer Längsrichtung des Ladungssicherungsprofils und parallel zu dem Ladungssicherungsprofil angeordnet ist. Auf diese Weise kann das Ladungssicherungsprofil im an den Montageprofilen festgelegten Zustand auch Ladungssicherungskräfte in einer Querrichtung des Ladungssicherungsprofils aufnehmen, sodass eine sichere und zuverlässige Ladungssicherung gewährleistet wird. Dies gilt insbesondere, wenn die Seitenanschlagfläche wenigstens im Wesentlichen parallel zur Längsrichtung des Ladungssicherungsprofils und wenigstens im Wesentlichen senkrecht zu dem Ladungssicherungsprofil angeordnet ist. Unabhängig davon können die Seitenanschläge des wenigstens einen Montageprofils durch die Ränder von Montageöffnungen des Montageprofils gebildet werden. Dies erlaubt eine besonders einfache und kostengünstige Realisierung der Seitenanschläge. Damit das Ladungssicherungsprofil in beide Querrichtungen Ladungssicherungskräfte aufnehmen kann, bietet es sich darüber hinaus an, wenn im an den Montageprofilen festgelegten Zustand des Ladungssicherungsprofils wenigstens zwei Seitenanschlagflächen eines Verbindungselements mit unterschiedlichen Seitenanschlägen eines Montageprofils in einem Paar gegenläufiger und wenigstens im Wesentlichen parallel zur Querrichtung des Ladungssicherungsprofils angeordneter Richtungen einen Formschluss bilden.

Um das Be- und Entladen des Nutzfahrzeugs für den Benutzer zu vereinfachen, kann das Ladungssicherungsprofil wenigstens im Wesentlichen trapezförmige Querschnitte aufweisen, sodass Seitenflächen des Ladungssicherungsprofils einen stumpfen Winkel, also einen Winkel zwischen 90° und 180°, mit der seitlich an das Ladungssicherungsprofil angrenzenden Wand des Kofferaufbaus einschließen, wenn das Ladungssicherungsprofil an den Montageprofilen festgelegt ist. Wenn dann Ladung beim Be- oder Entladen des Nutzfahrzeugs versehentlich gegen das Ladungssicherungsprofil stößt, kann die Ladung an dem Ladungssicherungsprofil bzw. den Seitenflächen des Ladungssicherungsprofils abgleiten, ohne dass das Be- bzw. Entladen stark beeinträchtigt oder die Ladung beschädigt wird. Besonders vorteilhaft ist es dabei, wenn das Ladungssicherungsprofil über wenigstens im Wesentlichen die gesamte Längserstreckung wenigstens im Wesentlichen trapezförmige Querschnitte aufweist.

Alternativ oder Zusätzlich können die Montageprofile wenigstens im Wesentlichen in horizontaler Erstreckung in dem Kofferaufbau angeordnet sein. Dann sind die Längsachsen der Montageprofile also wenigstens im Wesentlichen parallel zu dem Laderaumboden bzw. dem Dach des Kofferaufbaus angeordnet. Dies hat den Vorteil, dass die Position des Ladungssicherungsprofils flexibel an den jeweiligen Beladungszustand des Nutzfahrzeugs angepasst werden kann. Dies gilt insbesondere, wenn sich wenigstens ein Montageprofil in horizontaler Richtung wenigstens im Wesentlichen über die gesamte Wand des Kofferaufbaus erstreckt. Dabei können durchgehende Montageprofile oder mehrere Montageprofile nacheinander vorgesehen sein. Zudem bietet es sich hinsichtlich einer einfachen und zuverlässigen Ladungssicherung an, wenn der vertikale Abstand zwischen den Montageprofilen wenigstens 50 cm beträgt. Dann kann das Ladungssicherungsprofil sicher an den Montageprofilen gehalten werden. Dies gilt umso mehr, wenn die Montageprofile in vertikaler Richtung wenigstens 80 cm, insbesondere wenigstens 120 cm, vorzugsweise wenigstens 160 cm, voneinander beabstandet sind.

Um in effektiver Weise in einem möglichst großen Bereich der Wand des Kofferaufbaus Ladungssicherungsmöglichkeiten bereitzustellen zu können, kann das Ladungssicherungsprofil bzw. die Längsachse des Ladungssicherungsprofils wenigstens im Wesentlichen senkrecht zu wenigstens einer Längsachse wenigstens eines Montageprofils angeordnet sein, wenn das Ladungssicherungsprofil an den Montageprofilen festgelegt ist. Alternativ oder zusätzlich kann vorgesehen sein, dass das Ladungssicherungsprofil im an den Montageprofilen festgelegten Zustand höchstens 80 mm von der Wand des Kofferaufbaus in den Laderaum ragt. Dann beträgt also der Abstand zwischen der dem Laderaum zugewandten Seite des Ladungssicherungsprofils und der Wand höchstens 80 mm. Auf diese Weise wird gewährleistet, dass der im Laderaum für die Ladung zur Verfügung stehende Platz nur unwesentlich verringert wird und das Be- und Entladen des Kofferaufbaus nur geringfügig beeinträchtigt wird. Dies gilt umso mehr, wenn das Ladungssicherungsprofil im an den Montageprofilen festgelegten Zustand höchstens 50 mm, insbesondere höchstens 30 mm, vorzugsweise höchstens 20 mm, von der Wand des Kofferaufbaus in den Laderaum ragt.

Aus Kostengesichtspunkten können wenigstens ein Montageprofil und/oder das Ladungssicherungsprofil wenigstens im Wesentlichen aus Blech, insbesondere Stahlblech, ausgebildet sein. Insbesondere bei der Verwendung von Stahlblech wird dabei eine hohe Festigkeit und Steifigkeit des wenigstens einen Montageprofils und/oder des Ladungssicherungsprofils bereitgestellt, um den Belastungen bei der Ladungssicherung zuverlässig standzuhalten. Wenn wenigstens ein Montageprofil und/oder das Ladungssicherungsprofil als gerolltes Blechteil oder gerolltes Profil ausgebildet ist, kann das wenigstens eine Montageprofil und/oder das Ladungssicherungsprofil nicht nur einfach und kostengünstig, sondern auch materialsparend gefertigt werden, insbesondere im Vergleich zu Strangpressprofilen.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Kofferaufbau in einer perspektivischen Ansicht,
- Fig. 2: eine Seitenwand des Kofferaufbaus aus Fig. 1 mit zwei erfindungsgemäßen Ladungssicherungsprofilen vergrößert in einer perspektivischen Ansicht,
- Fig. 3A-B: ein oberes und ein unteres erfindungsgemäßes Verbindungselement eines der Ladungssicherungsprofile aus Fig. 2 jeweils vergrößert in einer perspektivischen Ansicht,
- Fig. 4A-B: die Seitenwand aus Fig. 2 mit dem oberen Verbindungselement in einer Arretierstellung und in einer Montagestellung jeweils in einer Schnittansicht gemäß der Schnittebene IVA/B- IVA/B aus Fig. 2,
- Fig. 5: die Seitenwand aus Fig. 2 mit dem unteren Verbindungselement in einer Schnittansicht gemäß der Schnittebene V-V aus Fig. 2.

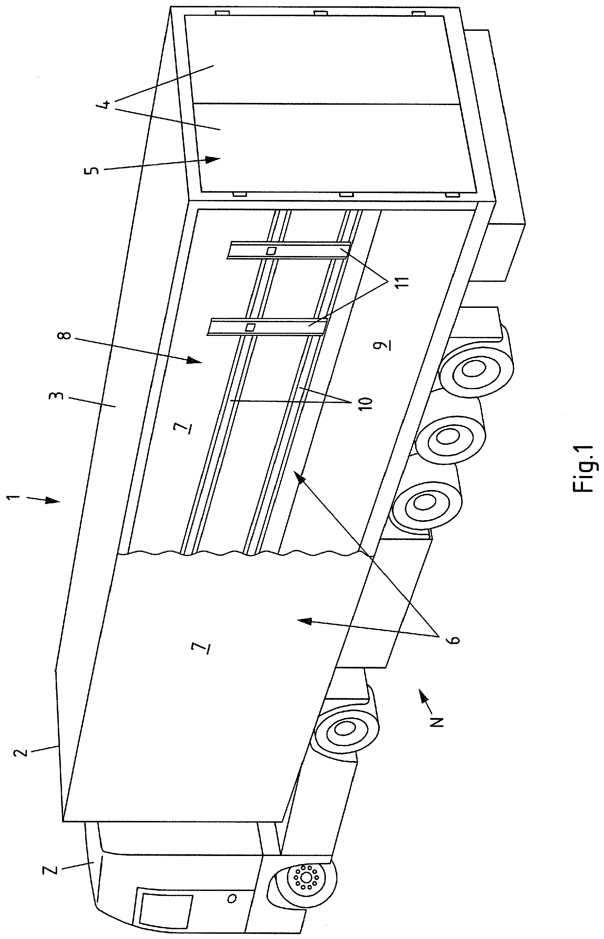

In der Fig. 1 ist ein Kofferaufbau 1 eines Nutzfahrzeugs N in Form eines Sattelaufliegers dargestellt, der von einer Zugmaschine Z gezogen wird. Der Kofferaufbau 1 umfasst eine feste Stirnwand 2, ein festes Dach 3, eine durch Flügeltüren 4 gebildete Rückwand 5 und feste Seitenwände 6. Dabei sind die Seitenwände 6 sowie die Stirnwand 2 jeweils durch Paneele 7 gebildet. Der Kofferaufbau 1 umschließt einen Laderaum 8, der der Aufnahme von zu transportierenden Gütern dient. Die vordere Seitenwand 6 ist teilweise weggelassen worden, um den Blick in den Laderaum 8 freizugeben, der nach unten durch einen Laderaumboden 9 begrenzt ist. Die hintere Seitenwand 6 weist zwei horizontal, d. h. wenigstens im Wesentlichen parallel zum Dach 3 bzw. Laderaumboden 9, verlaufende und vertikal, d. h. in einer Richtung wenigstens im Wesentlichen senkrecht zum Dach 3 bzw. Laderaumboden 9, voneinander beabstandete Montageprofile 10 auf. Zudem sind an den Montageprofilen 10 in zwei horizontal voneinander beabstandeten Montagepositionen zwei Ladungssicherungsprofile 11, vorliegend formschlüssig, festgelegt.

In dem dargestellten und insoweit bevorzugten Ausführungsbeispiel erstrecken sich die beiden Montageprofile 10 jeweils im Wesentlichen über die gesamte Länge der Seitenwand 6 und sind zudem in vertikaler Richtung übereinander angeordnet. Grundsätzlich können aber auch anstatt eines Montageprofils 10 mehrere voneinander beabstandete Montageprofile 10 etwa in horizontaler Richtung hintereinander vorgesehen sein. Außerdem können die vertikal voneinander beabstandeten Montageprofile 10 auch lediglich teilweise in vertikaler Richtung übereinander angeordnet sein. Alternativ oder zusätzlich können auch in die vordere Seitenwand 6 und/oder in die Stirnwand 2 Montageprofile 10 entsprechend eingelassen sein, um daran Ladungssicherungsprofile 11 befestigen zu können.

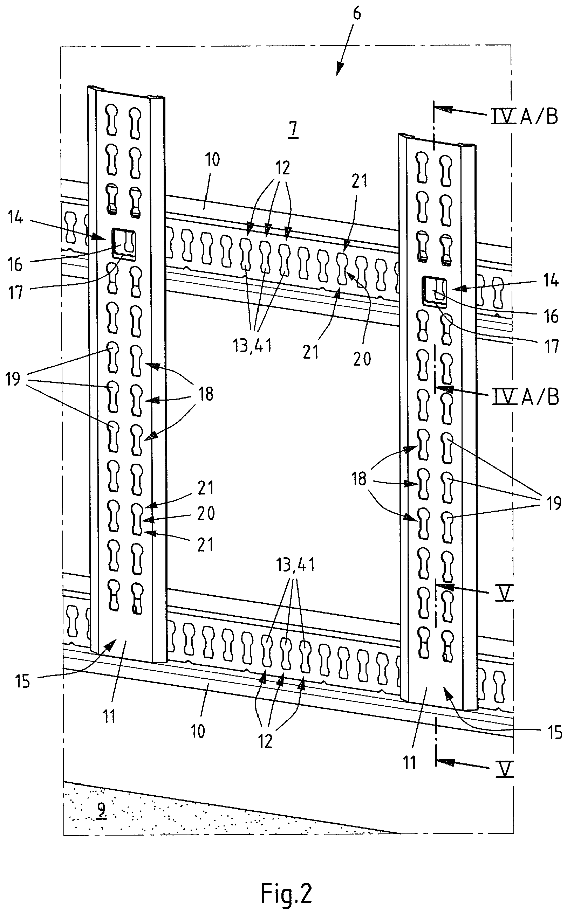

In der Fig. 2 ist ein Ausschnitt des Kofferaufbaus 1 aus Fig. 1 im Bereich der beiden Montageprofile 10 und der zwei Ladungssicherungsprofile 11 vergrößert in einer perspektivischen Ansicht dargestellt. Die Montageprofile 10 in Form von Ladungssicherungsschienen weisen jeweils eine Mehrzahl von in Längsrichtung des jeweiligen Montageprofils 10 nacheinander angeordneten Montageaufnahmen (41) auf, die sich zusammen etwa über die gesamte Längserstreckung des jeweiligen Montageprofils 10 erstrecken und die jeweils wenigstens eine Montagehinterschneidung 12 bereitstellen. Mithin erstrecken sich die Montagehinterschneidungen 12 eines Montageprofils 10 zusammen ebenfalls etwa über die gesamte Länge des Montageprofils 10. Zudem sind die Montagehinterschneidungen 12 sowie die diese bereitstellenden Montageaufnahmen 41 der Montageprofile 10 aus dem Laderaum 8 über eine Mehrzahl von ebenfalls in Längsrichtung der Montageprofile 10 nebeneinander angeordneten Montageöffnungen 13 zugänglich. Dabei ist jede Montagehinterschneidung 12 bzw. jede Montageaufnahme 41 über wenigstens eine Montageöffnung 13 zugänglich und wird jede Montagehinterschneidung 12 durch den Rand einer Montageöffnung 13 bereitgestellt. An den Montagehinterschneidungen 12 können neben den Ladungssicherungsprofilen 11 auch Ausrüstungsgegenstände des Kofferaufbaus 1, wie beispielsweise Kleiderstangen zum Aufhängen von Ladung, und/oder Ladungssicherungsmittel, etwa in Form von Ladungssicherungshaken oder dergleichen, festgelegt werden.

Die trapezförmige Querschnitte aufweisenden Ladungssicherungsprofile 11 sind in zwei horizontal voneinander beabstandeten Montagepositionen jeweils mittels eines oberen Verbindungselements 14 und eines von dem oberen Verbindungselement 14 in Längsrichtung des jeweiligen Ladungssicherungsprofils 11 beabstandeten unteren Verbindungselements 15 formschlüssig an den Montageprofilen 10 festgelegt. Dazu sind die Verbindungselemente 14, 15 abschnittsweise in Montageöffnungen 13 eingeführt und hintergreifen die entsprechenden Montagehinterschneidungen 12. Um die Ladungssicherungsprofile 11 von den Montageprofilen 10 lösen zu können, weisen die Ladungssicherungsprofile 11 zudem jeweils eine Betätigungsöffnung 16 auf, über die ein Griffelement 17 zum Verstellen des oberen Verbindungselements 14 zugänglich ist. Eine entsprechende Betätigungsöffnung 16 und/oder ein entsprechendes Griffelement 17 sind jedoch bedarfsweise entbehrlich.

Außerdem weisen die Ladungssicherungsprofile 11 jeweils eine Mehrzahl von in Längsrichtung des jeweiligen Ladungssicherungsprofils 11 verteilten Ladungssicherungselementen auf, die vorliegend als Ladungssicherungshinterschneidungen 18 ausgebildet sind. Dabei erstrecken sich die Ladungssicherungshinterschneidungen 18 zusammen über annähernd die gesamte Länge der Ladungssicherungsprofile 11. Zudem sind die Ladungssicherungshinterschneidungen 18 über eine Mehrzahl von in Längsrichtung des jeweiligen Ladungssicherungsprofils 11 verteilten Ladungssicherungsöffnungen 19 zugänglich. Dabei ist jede Ladungssicherungshinterschneidung 18 über wenigstens eine Ladungssicherungsöffnung 19 zugänglich und wird jede Ladungssicherungshinterschneidung 18 durch den Rand einer Ladungssicherungsöffnung 19 bereitgestellt. Die Ladungssicherungshinterschneidungen 18 können ebenso wie die Montagehinterschneidungen 12 dem Festlegen von Ausrüstungskomponenten des Kofferaufbaus 1 und/oder von Ladungssicherungsmitteln dienen.

Im dargestellten und insoweit bevorzugten Ausführungsbeispiel sind die Montageöffnungen 13 und die Ladungssicherungsöffnungen 19 gleichartig ausgebildet, was jedoch nicht zwingend erforderlich ist. Sowohl die Montageöffnungen 13 als auch die Ladungssicherungsöffnungen 19 weisen einen mittleren Stegabschnitt 20 und zwei sich gegenüber dem Stegabschnitt 20 zur Seite hin erweiternde Lochabschnitte 21 auf. Die Montageöffnungen 13 und Ladungssicherungsöffnungen 19 weisen damit die Form eines doppelten bzw. gespiegelten Schlüsselochs auf. Unabhängig von der Form der Montageöffnungen 13 bzw. Ladungssicherungsöffnungen 19 können diese beispielsweise durch Stanzen hergestellt werden.

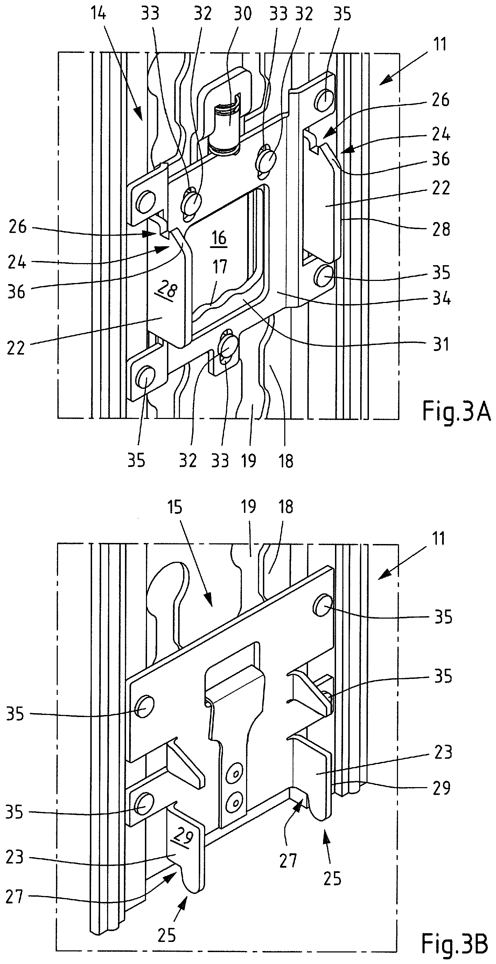

In den Fig. 3A-B sind Ausschnitte der Rückseite eines der Ladungssicherungsprofile 11 aus Fig. 2 dargestellt, wobei in Fig. 3A ein Ausschnitt im Bereich des oberen Verbindungselements 14 und in Fig. 3B ein Ausschnitt im Bereich des unteren Verbindungselements 15 gezeigt ist. Sowohl das obere Verbindungselement 14 als auch das untere Verbindungselement 15 weisen jeweils zwei in Querrichtung des Ladungssicherungsprofils 11 voneinander beabstandete Hakenelemente 22, 23 auf, die jeweils einen Halteabschnitt 24, 25 umfassen. Zum formschlüssigen Festlegen des Ladungssicherungsprofils 11 an den Montageprofilen 10 können die Hakenelemente 22,23 abschnittsweise in Montageöffnungen 13 der Montageprofile 10 eingeführt werden, sodass die Halteabschnitte 24, 25 die entsprechenden Montagehinterschneidungen 12 hintergreifen.

Darüber hinaus bilden die Hakenelemente 22, 23 beider Verbindungselemente 14, 15 jeweils eine Hakenaufnahme 26, 27, wobei die Hakenaufnahmen 26 der oberen Hakenelemente 22 nutförmig ausgebildet sind. Zudem weisen die Hakenelemente 22, 23 beider Verbindungselemente 14, 15 Seitenanschlagflächen 28, 29 zur Anlage an Ränder der Montageöffnungen 13 auf. Diese Seitenanschlagflächen 28, 29 bilden jeweils mit einem durch einen Stegabschnitt 20 einer Montageöffnungen 13 gebildeten Seitenanschlag der Montageprofile 10 einen Formschluss in Querrichtung des Ladungssicherungsprofils 11, wenn das Ladungssicherungsprofil 11 an den Montageprofilen 10 festgelegt ist.

Im dargestellten und insoweit bevorzugten Ausführungsbeispiel sind die Hakenelemente 22 des oberen Verbindungselements 14 mitsamt der zugehörigen Halteabschnitte 24 in Längsrichtung des Ladungssicherungsprofils 11 gegen die Rückstellkraft eines Federmittels 30 nach unten verschiebbar. Dazu sind die oberen Hakenelemente 22 über ein Schiebeelement 31 miteinander verbunden, das über Stiftelemente 32 in Langlöchern 33 eines fest mit dem Ladungssicherungsprofil 11 verbundenen Führungselements 34 verschiebbar gehalten ist. Das Federmittel 30 wirkt dabei zwischen dem Schiebeelement 31 und dem Führungselement 34, das beispielsweise mittels Schrauben 35 fest mit dem Ladungssicherungsprofil 11 verbunden sein kann.

Weiterhin ist das über die Betätigungsöffnung 16 auch von der Vorderseite des Ladungssicherungsprofils 11 gut zugängliche Griffelement 17 an dem Schiebeelement 31 vorgesehen. So kann der Benutzer das Schiebeelement 31 einfach in Längsrichtung des Ladungssicherungsprofils 11 verschieben, auch wenn das Ladungssicherungsprofil 11 an den Montageprofilen 10 festgelegt ist. Dabei ist es auch denkbar, dass nicht wie vorliegend die oberen Hakenelemente 22 als Ganzes verschiebbar ausgebildet sind, sondern die oberen Hakenelemente 22 ortsfest mit dem Ladungssicherungsprofil 11 verbunden sind und lediglich die Halteabschnitte 24 der oberen Hakenelemente 22 relativ zu den übrigen Teilen der oberen Hakenelemente 22 verschiebbar sind.

Im Gegensatz zu den Hakenelementen 22 des oberen Verbindungselements 14 sind die Hakenelemente 23 des unteren Verbindungselements 15 sowie deren Halteabschnitte 25 nicht entlang des Ladungssicherungsprofils 11 verstellbar, sondern ortsfest über Schrauben 35 mit dem Ladungssicherungsprofil 11 verbunden. Es ist jedoch ebenso denkbar, dass anstatt der oberen Hakenelemente 22 die unteren Hakenelemente 23 oder sowohl die unteren Hakenelemente 22 als auch die oberen Hakenelemente 23 verschiebbar ausgebildet sind.

Das formschlüssige Festlegen des Ladungssicherungsprofils 11 an den Montageprofilen 10 kann in einfacher Weise erfolgen, indem zuerst die beiden unteren Hakenelemente 23 mit den zugehörigen Halteabschnitten 25 in zwei verschiedene Montageöffnungen 13 des unteren der beiden Montageprofile 10 eingesteckt werden, das Ladungssicherungsprofil 11 dann um eine Schwenkachse wenigstens im Wesentlichen parallel zu der Längsachse des unteren Montageprofils 10 aufgeschwenkt wird und zuletzt die Verbindung zwischen dem oberen Verbindungselement 14 und dem oberen der beiden Montageprofile 10 gefügt wird.

Damit das Fügen der Verbindung zwischen dem oberen Verbindungselement 14 und dem oberen Montageprofil 10 besonders einfach erfolgen kann, weisen die dargestellten und insoweit bevorzugten Halteabschnitte 24 der oberen Hakenelemente 22 jeweils eine zur Längsrichtung des Ladungssicherungsprofils 11 geneigte Führungsfläche 36 auf. Diese an der von dem Ladungssicherungsprofil 11 abgewandten Seite der Halteabschnitte 24 angeordnete Führungsfläche 36 gleitet beim Einstecken der oberen Hakenelemente 22 in Montageöffnungen 13 an Rändern der Montageöffnungen 13 ab, sodass die oberen Hakenelemente 22 in Längsrichtung des Ladungssicherungsprofils 11 in Richtung des unteren Verbindungselements 15 und entgegen der Rückstellkraft des Federmittels 30 verschoben werden, bis die Hakenelemente 22 in Richtung der Rückstellkraft des Federmittels 30 in das Montageprofil 10 formschlüssig einrasten.

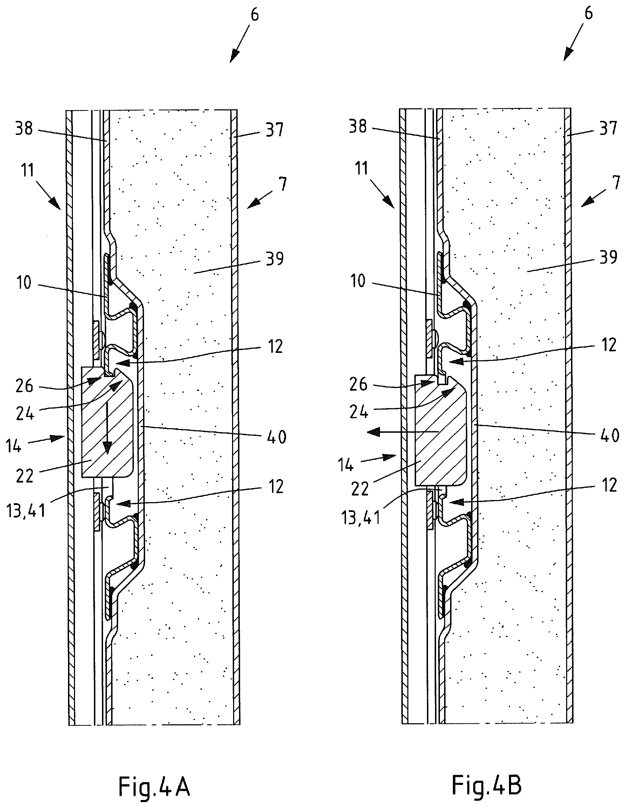

In den Fig. 4A-B ist jeweils ein Querschnitt durch die hintere der beiden Seitenwände 6 und durch eines der Ladungssicherungsprofile 11 im Bereich des oberen der beiden Montageprofile 10 dargestellt, wobei die Hakenelemente 22 des oberen Verbindungselements 14 in unterschiedlichen Stellungen abgebildet sind. Dabei weist das die Seitenwand 6 bildende Paneel 7 eine äußere Decklage 37 und eine zum Laderaum 8 des Kofferaufbaus 1 weisende innere Decklage 38 auf. Die Decklagen 37, 38 können mehrschichtig aufgebaut sein. Dabei kommen aus optischen Gesichtspunkten beispielsweise Folien oder Lackierungen als Schichten in Frage. Es können aber auch als Dampf- oder Gassperren wirkende Folien, etwa Aluminiumfolien, oder andere Schichten vorgesehen sein. Die Decklagen 37, 38 weisen jedoch wenigstens eine strukturgebende Lage auf, die die Steifigkeit des Paneels 7 wenigstens im Wesentlichen mitbestimmt. Dabei kann es sich um einen Kunststoff, insbesondere einen faserverstärkten Kunststoff handeln. Beim dargestellten und insoweit bevorzugten Kofferaufbau 1 wird die strukturgebende Lage der inneren Decklage 38 durch ein Blech, insbesondere Stahlblech, bereitgestellt. Zwischen der inneren Decklage 38 und der äußeren Decklage 37 ist eine Kernlage 39 aus einem geschäumten Kunststoff vorgesehen. Dabei ist der Kunststoff ungeschäumt zwischen die innere Decklage 38 und die äußere Decklage 37 eingebracht und dort ausgeschäumt worden. Um dem Expansionsdruck des Kunststoffs beim Ausschäumen standzuhalten, werden die innere Decklage 38 und die äußere Decklage 37 während des Ausschäumens des Kunststoffs durch eine Form in Position gehalten.

Die innere Decklage 38 ist abschnittsweise nach innen umgeformt und bildet so eine sich in Längsrichtung des Paneels 7 weisende rinnenförmige Mulde 40, in der das Montageprofil 10 bündig aufgenommen ist. Das dargestellte und insoweit bevorzugte Montageprofil 10 ist aus einem Stahlblech gebildet und über die Mulde 40 mit der inneren Decklage 38 verklebt.

Die Hakenelemente 22 des oberen Verbindungselements 14 greifen in unterschiedliche Montageöffnungen 13 des oberen Montageprofils 10 ein. Dabei bilden die Seitenanschlagflächen 28 der oberen Hakenelemente 22 jeweils mit einem durch den Rand einer Montageöffnung 13 gebildeten Seitenanschlag einen Formschluss in Längsrichtung des oberen Montageprofils 10. In der in Fig. 4A dargestellten Arretierstellung der Halteabschnitte 24 bzw. der Hakenelemente 22 bilden die Hakenaufnahmen 26 der Hakenelemente 22 mit dem Montageprofil 10 zusätzlich in Längsrichtung des Ladungssicherungsprofils 11 sowie in einem paar gegenläufiger Richtungen senkrecht zur Seitenwand 6 einen Formschluss. Dann bildet das obere Verbindungselement 14 mit dem oberen der beiden Montageprofile 10 also in vertikaler Richtung nach oben, in Fahrtrichtung sowie gegen die Fahrtrichtung und in dem Paar gegenläufiger Richtungen senkrecht zur Seitenwand 6 einen Formschluss. Aus der Arretierstellung können die Halteabschnitte 24 bzw. die Hakenelemente 22 in die in der Fig. 4B dargestellte Montagestellung verstellt werden, indem die Hakenelemente 22 in Längsrichtung des Ladungssicherungsprofils 11 nach unten verschoben werden. In dieser Montagestellung der Halteabschnitte 24 bzw. der Hakenelemente 22 ist der Formschluss zwischen den Hakenaufnahmen 26 und dem Montageprofil 10 in der zur Wand 6 senkrechten und in den Laderaum 8 zeigenden Richtung aufgehoben, sodass die Hakenaufnahmen 26 aus den Montageöffnungen 13 herausgezogen werden können und das Ladungssicherungsprofil 11 von den Montageprofilen 10 gelöst werden kann.

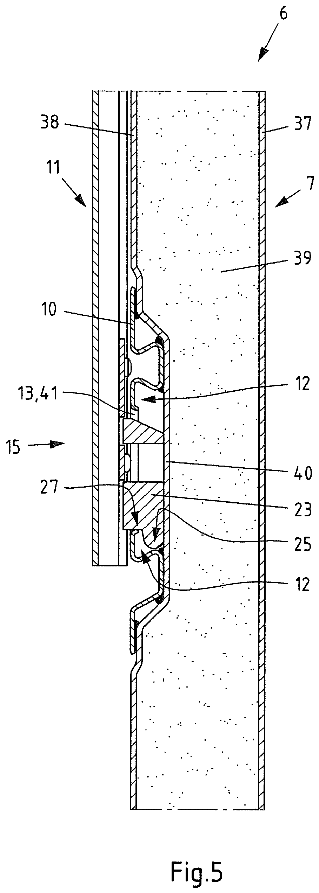

In der Fig. 5 ist ein Querschnitt durch die hintere der beiden Seitenwände 6 und durch eines der Ladungssicherungsprofile 11 im Bereich des unteren der beiden Montageprofile 10 dargestellt. Das untere Montageprofil 10 und das in den Fig. 4A-B abgebildete obere Montageprofil 10 sind gleichartig ausgebildet. Zudem ist das untere Montageprofil 10 ebenso wie das obere Montageprofil 10 in einer Mulde 40 in dem Paneel 7 aufgenommen. Es ist jedoch auch denkbar, dass die beiden Montageprofile 10 unterschiedlich ausgestaltet sind, bevorzugt ist dies jedoch nicht.

Im dargestellten und insoweit bevorzugten Ausführungsbeispiel greifen die Hakenelemente 23 des unteren Verbindungselements 15 in unterschiedliche Montageöffnungen 13 des unteren Montageprofils 10 ein und hintergreifen unterschiedliche Montagehinterschneidungen 12 des unteren Montageprofils 10.

Dabei bilden die Seitenanschlagflächen 29 der unteren Hakenelemente 23 jeweils mit einem durch den Rand einer Montageöffnung 13 gebildeten Seitenanschlag einen Formschluss in Längsrichtung des unteren Montageprofils 10. Außerdem bilden die Hakenaufnahmen 27 der unteren Hakenelemente 23 mit dem unteren Montageprofil 10 in Längsrichtung des Ladungssicherungsprofils 11 und in einer zu der Seitenwand 6 senkrecht angeordneten und in den Laderaum 8 gerichteten Richtung einen Formschluss, allerdings nicht wie die Hakenaufnahmen 26 der oberen Hakenelemente 22 in einer zu der Seitenwand 6 senkrecht angeordneten und auf die Seitenwand 6 gerichteten Richtung. In dieser Richtung stützen sich die unteren Hakenelemente 23 an dem Montageprofil 10 des Paneels 7 ab und bilden so einen Formschluss.

### Bezugszeichenliste

- 1: Kofferaufbau
- 2: Stirnwand
- 3: Dach
- 4: Flügeltür
- 5: Rückwand
- 6: Seitenwand
- 7: Paneel
- 8: Laderaum
- 9: Laderaumboden
- 10: Montageprofil
- 11: Ladungssicherungsprofil
- 12: Montagehinterschneidung
- 13: Montageöffnung
- 14: oberes Verbindungselement
- 15: unteres Verbindungselement
- 16: Betätigungsöffnung
- 17: Griffelement
- 18: Ladungssicherungshinterschneidung
- 19: Ladungssicherungsöffnung
- 20: Stegabschnitt
- 21: Lochabschnitt
- 22: oberes Hakenelement
- 23: unteres Hakenelement
- 24: oberer Halteabschnitt
- 25: unterer Halteabschnitt
- 26: obere Hakenaufnahme
- 27: untere Hakenaufnahme
- 28: obere Seitenanschlagfläche
- 29: untere Seitenanschlagfläche
- 30: Federmittel
- 31: Schiebeelement
- 32: Stiftelement
- 33: Langloch
- 34: Führungselement
- 35: Schraube
- 36: Führungsfläche
- 37: äußere Decklage
- 38: innere Decklage
- 39: Kernlage
- 40: Mulde
- 41: Montageaufnahme

- N: Nutzfahrzeug
- Z: Zugmaschine

## Patentansprüche

1. Kofferaufbau (1) für ein Nutzfahrzeug (N), insbesondere Lastkraftwagen, Anhänger oder Sattelauflieger, mit einem Laderaum (8) und wenigstens einer den Laderaum (8) teilweise begrenzenden Wand (2, 6), insbesondere Seitenwand (6), wobei die Wand (2, 6) wenigstens zwei an den Laderaum (8) grenzende und vertikal voneinander beabstandete Montageprofile (10) aufweist, wobei die Montageprofile (10) jeweils wenigstens eine aus dem Laderaum (8) zugängliche Montageaufnahme aufweisen und wobei wenigstens ein Ladungssicherungsprofil (11) mit wenigstens einem Ladungssicherungselement zum, insbesondere formschlüssigen, Festlegen von Ladungssicherungsmitteln vorgesehen ist,
**dadurch gekennzeichnet, dass**
das Ladungssicherungsprofil (11) wenigstens zwei in Längsrichtung des Ladungssicherungsprofils (11) voneinander beabstandete Verbindungselemente (14, 15) jeweils zum Eingreifen in wenigstens eine Montageaufnahme eines Montageprofils (10) aufweist und dass das Ladungssicherungsprofil (11) in wenigstens zwei wenigstens im Wesentlichen horizontal voneinander beabstandeten Montagepositionen jeweils derart an den Montageprofilen (10) festlegbar ist, dass die Verbindungselemente (14, 15) in Montageaufnahmen unterschiedlicher Montageprofile (10) eingreifen.

2. Kofferaufbau nach Anspruch 1,
**dadurch gekennzeichnet, dass**
das Ladungssicherungsprofil (11) in den Montagepositionen formschlüssig und/oderkraftschlüssig an den Montageprofilen (10), insbesondere in den Montageaufnahmen, festlegbar ist und/oder dass das Ladungssicherungsprofil (11) in den Montagepositionen mittels wenigstens einer, insbesondere von dem Ladungssicherungsprofil (11) gehaltenen, Schraube und/oder mittels wenigstens eines, insbesondere von dem Ladungssicherungsprofil (11) gehaltenen, Elektromagneten an den Montageprofilen (10), insbesondere in den Montageaufnahmen, festlegbar ist und/oder dass das Ladungssicherungsprofil (11) im an den Montageprofilen (10) festgelegten Zustand ortsfest an den Montageprofilen (10) gehalten ist.

3. Kofferaufbau nach Anspruch 1 oder 2,
**dadurch gekennzeichnet, dass**
die Montageaufnahmen der Montageprofile (10) jeweils wenigstens eine aus dem Laderaum zugängliche Montagehinterschneidung (12) bereitstellen, dass die Verbindungselemente (14,15) des Ladungssicherungsprofils jeweils zum Hintergreifen wenigstens einer Montagehinterschneidung eines Montageprofils (10) ausgebildet ist, dass das Ladungssicherungsprofil (11) in den Montagepositionen jeweils derart formschlüssig an den Montageprofilen (10) festlegbar ist, dass die Verbindungselemente (14, 15) Montagehinterschneidungen (12) unterschiedlicher Montageprofile (10) hintergreifen, und dass, vorzugsweise, das Ladungssicherungsprofil (11) in den Montagepositionen ausschließlich über die Verbindungselemente (14,15) formschlüssig an den Montageprofilen (10) festlegbar ist.

4. Kofferaufbau nach Anspruch 3,
**dadurch gekennzeichnet, dass**
die Verbindungselemente (14, 15) jeweils wenigstens ein Hakenelement (22, 23) mit wenigstens einem Halteabschnitt (24, 25) zum Hintergreifen einer Montagehinterschneidung (12) aufweisen.

5. Kofferaufbau nach Anspruch 4,
**dadurch gekennzeichnet, dass** wenigstens ein Halteabschnitt (24, 25), insbesondere gegen eine Rückstellkraft eines Federmittels (30) und/oder gegenüber einem anderen Halteabschnitt (24, 25), gegenüber dem Ladungssicherungsprofil (11), insbesondere entlang des Ladungssicherungsprofils (11), verstellbar, insbesondere verschiebbar, ist.

6. Kofferaufbau nach Anspruch 5,
**dadurch gekennzeichnet, dass** wenigstens ein verstellbarer Halteabschnitt (24), insbesondere an der von dem Ladungssicherungsprofil (11) abgewandten Seite, eine zur Längsrichtung des Ladungssicherungsprofils (11) geneigte Führungsfläche (36) aufweist und dass die wenigstens eine Führungsfläche (36) derart ausgebildet ist, dass die Führungsfläche (36) beim Verbinden des zugehörigen Verbindungselements (14, 15) mit einem Montageprofil (10) an dem Montageprofil (10), insbesondere an einer Kante des Montageprofils (10), abgleitet und den Halteabschnitt (24), insbesondere gegen eine Rückstellkraft eines Federmittels (30), verstellt.

7. Kofferaufbau nach einem der Ansprüche 4 bis 6,
**dadurch gekennzeichnet, dass**
im an den Montageprofilen (10) festgelegten Zustand des Ladungssicherungsprofils (11) wenigstens eine durch ein Hakenelement (22, 23) gebildete Hakenaufnahme (26, 27) mit einem Montageprofil (10) wenigstens in einer Längsrichtung des Ladungssicherungsprofils (11) einen Formschluss bildet und/oder dass wenigstens eine durch ein Hakenelement (22, 23) gebildete Hakenaufnahme (26, 27) nutförmig ausgebildet ist.

8. Kofferaufbau nach einem der Ansprüche 4 bis 7,
**dadurch gekennzeichnet, dass** wenigstens ein Verbindungselement (14, 15) wenigstens zwei in Querrichtung des Ladungssicherungsprofils (11) voneinander beabstandete Hakenelemente (22, 23) jeweils mit wenigstens einem Halteabschnitt (24, 25) aufweist und dass, vorzugsweise, im an den Montageprofilen (10) festgelegten Zustand des Ladungssicherungsprofils (11) wenigstens zwei durch in Querrichtung des Ladungssicherungsprofils (11) voneinander beabstandete Hakenelemente (22, 23) eines Verbindungselements (14, 15) gebildete Hakenaufnahmen (26, 27) jeweils mit demselben Montageprofil (10) in derselben Längsrichtung des Ladungssicherungsprofils (11) einen Formschluss bilden.

9. Kofferaufbau nach einem der Ansprüche 1 bis 8,
**dadurch gekennzeichnet, dass** wenigstens ein Montageprofil (10) eine Mehrzahl von in Längsrichtung und/oder Querrichtung des Montageprofils (10) verteilten Montageaufnahmen, insbesondere Montagehinterschneidungen (12), aufweist und/oder dass sich die wenigstens eine Montageaufnahme, insbesondere die wenigstens eine Montagehinterschneidung (12), wenigstens eines Montageprofils (10), insbesondere wenigstens im Wesentlichen ununterbrochen, wenigstens im Wesentlichen über die gesamte Längserstreckung des Montageprofils (10) erstreckt.

10. Kofferaufbau nach einem der Ansprüche 1 bis 9,
**dadurch gekennzeichnet, dass** wenigstens eine Montageaufnahme, insbesondere wenigstens eine Montagehinterschneidung (12), über wenigstens eine Montageöffnung (13) zugänglich ist und dass, vorzugsweise, die wenigstens eine Montageaufnahme, insbesondere die wenigstens eine Montagehinterschneidung (12), eines Montageprofils (10) über eine Mehrzahl von in Längsrichtung des Montageprofils (10) verteilten Montageöffnungen (13) zugänglich ist.

11. Kofferaufbau nach einem der Ansprüche 1 bis 10,
**dadurch gekennzeichnet, dass**
das Ladungssicherungsprofil (11) eine Mehrzahl von in Längsrichtung des Ladungssicherungsprofils (11) verteilten Ladungssicherungselementen aufweist und/oder dass sich das wenigstens eine Ladungssicherungselement, insbesondere wenigstens im Wesentlichen ununterbrochen, wenigstens im Wesentlichen über die gesamte Längserstreckung des Ladungssicherungsprofils (11) erstreckt.

12. Kofferaufbau nach einem der Ansprüche 1 bis 11,
**dadurch gekennzeichnet, dass**
das wenigstens eine Ladungssicherungselement eine, insbesondere über wenigstens eine Ladungssicherungsöffnung (19) zugängliche, Ladungssicherungshinterschneidung (18) ist und dass, vorzugsweise, die wenigstens eine Ladungssicherungshinterschneidung (18) über eine Mehrzahl von in Längsrichtung des Ladungssicherungsprofils (11) verteilten Ladungssicherungsöffnungen (19) zugänglich ist.

13. Kofferaufbau nach einem der Ansprüche 1 bis 12,
**dadurch gekennzeichnet, dass**
im an den Montageprofilen (10) festgelegten Zustand des Ladungssicherungsprofils (11) wenigstens eine, insbesondere wenigstens im Wesentlichen parallel zur Längsrichtung des Ladungssicherungsprofils (11) und wenigstens im Wesentlichen senkrecht zu dem Ladungssicherungsprofil (11) angeordnete, Seitenanschlagfläche (28, 29) wenigstens eines Verbindungselements (14, 15) mit einem, insbesondere durch den Rand einer Montageöffnung (13) gebildeten, Seitenanschlag eines Montageprofils (10) wenigstens im Wesentlichen in Querrichtung des Ladungssicherungsprofils (11) einen Formschluss bildet und dass, vorzugsweise, im an den Montageprofilen (10) festgelegten Zustand des Ladungssicherungsprofils (11) wenigstens zwei Seitenanschlagflächen (28, 29) eines Verbindungselements (14, 15) mit unterschiedlichen Seitenanschlägen eines Montageprofils (10) in einem Paar gegenläufiger Längsrichtungen des Ladungssicherungsprofils (11) einen Formschluss bilden.

14. Kofferaufbau nach einem der Ansprüche 1 bis 13,
**dadurch gekennzeichnet, dass** das Ladungssicherungsprofil (11), insbesondere über wenigstens im Wesentlichen die gesamte Längserstreckung, wenigstens im Wesentlichen trapezförmige Querschnitte aufweist und/oder dass die Montageprofile (10) wenigstens im Wesentlichen horizontal angeordnet sind und/oder dass der vertikale Abstand zwischen den Montageprofilen (10) wenigstens 50 cm, insbesondere wenigstens 80 cm, weiter insbesondere wenigstens 120 cm, weiter insbesondere wenigstens 160 cm, beträgt

15. Kofferaufbau nach einem der Ansprüche 1 bis 14,
**dadurch gekennzeichnet, dass**
das Ladungssicherungsprofil (11) im an den Montageprofilen (10) festgelegten Zustand wenigstens im Wesentlichen senkrecht zu wenigstens einer Längsrichtung wenigstens eines Montageprofils (10) angeordnet ist und/oder dass das Ladungssicherungsprofil (11) im an den Montageprofilen (10) festgelegten Zustand höchstens 80 mm, insbesondere höchstens 50 mm, weiter insbesondere höchstens 30 mm, weiter insbesondere höchstens 20 mm, von der Wand (2, 6) in den Laderaum (8) ragt.
